Europäisches Patentamt

European Patent Office

Office européen des brevets

(19)

(11) Publication number: **0 038 597**
**B1**

## (12) EUROPEAN PATENT SPECIFICATION

(45) Date of publication of patent specification: **15.02.84**

(21) Application number: **81200410.9**

(22) Date of filing: **09.04.81**

(51) Int. Cl.³: **B 01 J 3/02, F 04 D 23/00, C 10 J 3/50, B 65 G 53/40**

(54) **Centrifugal pump for feeding solid particles to a pressurized vessel and process for feeding solid fuel to a high pressure gasification reactor.**

(30) Priority: **23.04.80 NL 8002350**

(43) Date of publication of application:
**28.10.81 Bulletin 81/43**

(45) Publication of the grant of the patent:
**15.02.84 Bulletin 84/7**

(84) Designated Contracting States:
**BE DE FR GB IT NL**

(56) References cited:
**DE - C - 884 923**
**FR - A - 2 310 296**
**GB - A - 469 451**
**GB - A - 733 533**
**US - A - 2 621 966**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **van der Burgt, Maarten Johannes**
**Carel van Bylandtlaan 30**
**NL-2596 HR The Hague (NL)**

(74) Representative: **Puister, Antonius Tonnis, Mr. et al,**
**P.O. Box 302**
**NL-2501 CH The Hague (NL)**

Courier Press, Leamington Spa, England.

Centrifugal pump for feeding solid particles to a pressurized vessel and process for feeding solid fuel to a high pressure gasification reactor

The application relates to a centrifugal pump for feeding solid particles to a pressurized vessel, comprising a rotor arranged rotatably in the vessel, which rotor consists of two trays the concaves of which face each other and the edges of which define a slot over the entire circumference of the rotor, and one or two feed inlets connected axially to the rotor.

Such a pump with one feed inlet is known from the Netherlands patent application No. 7505578 laid open to public inspection. There are also pumps having two axial feed inlets, that is to say on either side of the rotor which is arranged rotatably around a horizontal shaft. These centrifugal pumps are used to feed powders or granular materials, for example reagents or catalysts, to some space in which the pressure is higher than outside. It is obvious that these pumps can also be used in situations without pressure difference.

When these pumps are in operation, the solid matter is cast through the feed inlet onto the rotating rotor.

Owing to the centrifugal acceleration, the solid particles acquire a high velocity which enables them to overcome the difference in pressure between the inside and outside of the vessel and to prevent leakage of gas from the pressurized vessel.

In certain centrifugal pumps the rotor is provided with a number of radial passages, known as centrifugal nozzles, between the two trays. In the types referred to in the present application the solid matter can be expelled over the entire circumference of the rotor through a narrow slot which is defined by the edges of the two trays. In that case it is also possible to allow the two trays to rotate at different speeds in order to prevent clogging of the slot.

The solids leave the edge of the rotor with a radial and tangential velocity component. In the usual embodiments the rotor has a rotational speed of, for example, 500—5000 rev./min. and the particles acquire a radial velocity of about 10 m/s and a tangential velocity of about 100 m/s. In this manner it is possible to overcome pressure differences of some tens of bars, for example 20—40 bars.

Although the known centrifugal pumps are fairly satisfactory in practice, they are still capable of improvement. Investigations have shown that a prolonged trouble-free period of operation of such a pump is partly dependent on the internal shape of the rotor, in other words, on the shape and the spacing between the trays. The cone-shaped trays of the centrifugal pump referred to in NL—A—7505578 occassionally give rise to troubles such as clogging (i.e. the solid particles are so densely packed that the 360° slot becomes clogged) or back-flow (i.e. the concentration of the solid particles in the carrier gas becomes too low, as a result of which sufficient pressure cannot be built up and gas leaks from the pressurized vessel into the pump).

It has now been found that a prolonged trouble-free period of operation is ensured if the product of the spacing $d[m]$ between the two trays, measured at a distance $R[m]$ from the rotor centre, and the distance $R[m]$ lies in the range between $0.9\ C[m^2]$ and $1.1.\ C[m^2]$, where C is a constant.

The invention therefore relates to a centrifugal pump for feeding solid particles to a pressurized vessel, comprising a rotor arranged rotatably in the vessel, which rotor consists of two trays the concaves of which face each other and the edges of which define a slot over the entire circumference of the rotor, and one or two feed inlets connected axially to the rotor, characterized in that the product of the spacing $d[m]$ between the two trays, measured at a distance $R[m]$ from the rotor centre, and the distance $R[m]$ lies in the range between $0.9\ C\ m^2$ and $1.1\ C\ [m^2]$, where C is a constant.

A conclusive explanation of the effect found is difficult to give and is of no practical value either. It is assumed, however, that the relation found between R and d imparts such a shape to the trays that the gas pressure distribution between the trays optimally corresponds with the course of the centrifugal force of the solid particles, allowing for friction losses.

One of the trays may have an arbitrary shape, but then the shape of the other tray is in fact fixed as a result of the requirement that $R \times d$ should lie in the range of from $0.9\ C$ to $1.1\ C$.

One or both trays preferably exhibit at least substantially the shape of an orthogonal hyperboloid, that is to say their internal surface can be described by rotating an orthogonal hyperbole around one of its axes, which axis of rotation then coincides with the axis of rotation of the rotor.

In order to reduce the risk of back-flow of gas from the pressurized vessel further, the trays are preferably bent towards each other along the tray circumference. A small constriction is thus obtained at the outflow opening which inhibits the passage to some extent, but does ensure that the space between the trays is invariably satisfactorily filled with solid particles. It is of course also possible to provide said constriction in the outflow opening in rotors having centrifugal nozzles.

In order to transfer as much impulse and energy as possible from the rotating rotor to the solid particles, and at the same time with the largest possible radial component since the pressure gradient of the gas also has a radial direction, the concave side of one or both trays is preferably provided with radially directed raised parts and/or recesses. These raised parts or recesses may have any profile, such as ridges, grooves, slots, etc., but they may also be vertical walls dividing the space between the two trays into sector-shaped compartments. These sector-shaped compartments should not be mistaken for the more or less tubular centrifugal nozzles. If said walls are fitted to one tray only, then it is possible to rotate both trays at a slightly different speed, as known in order to prevent clogging of the outlet slot.

The centrifugal pump according to the invention can be used in various processes, such as supercritical gas extraction, gasification of coal, combustion of coal under pressure, blast-furnace production of steel (introduction of fuel and/or ore), catalytic cracking (introduction of catalyst), desulphurization under pressure (introduction of limestone or dolomite).

The centrifugal pump according to the invention is in particular and with advantage used to feed solid carbon-containing fuel, for example coal dust, to a high-pressure gasification reactor, in which the fuel is then gasified to a mixture of carbon monoxide and hydrogen. The application therefore also relates to a process for feeding solid carbon-containing fuel to and the subsequent gasification thereof in a high-pressure gasification reactor, which process is characterized in that the fuel is fed by means of a centrifugal pump according to the invention.

## Claims

1. A centrifugal pump for feeding solid particles to a pressurized vessel, comprising a rotor arranged rotatably in the vessel, which rotor consists of two trays the concaves of which face each other and the edges of which define a slot over the entire circumference of the rotor, and one or two feed inlets connected axially to the rotor, characterized in that the product of the spacing $d[m]$ between the two trays, measured at a distance $R[m]$ from the rotor centre, and the distance $R[m]$ lies in the region between $0.9\ C[m^2]$ and $1.1\ C[m^2]$, where C is a constant.

2. A centrifugal pump as claimed in claim 1, characterized in that one or both trays have at least substantially the shape of an orthogonal hyperboloid.

3. A centrifugal pump as claimed in claim 1 or 2, characterized in that the trays are bent towards each other along the tray circumference.

4. A centrifugal pump as claimed in any one of claims 1—3, characterized in that the concave of one or both trays is provided with radially directed raised parts and/or recesses.

5. A process for feeding solid carbon-containing fuel to and the subsequent gasification thereof in a high-pressure gasification reactor, characterized in that the fuel is fed by means of a centrifugal pump as claimed in any one of claims 1—4.

## Patentansprüche

1. Zentrifugalpumpe für die Zuführung von Feststoffpartikeln in einen unter Überdruck gesetzten Behälter, mit einem drehbar in dem Behälter angeordneten Rotor, der aus zwei Schalenelementen besteht, deren Konkavseiten einander zugewandt sind und deren Kanten einen Spalt über den gesamten Umfang des Rotors definieren, und mit einem oder zwei axial mit dem Rotor verbundenen Zuführeinlässen, dadurch gekennzeichnet, daß das Produkt aus dem in einer Entfernung R [m] vom Rotorzentrum gemessenen Abstand d [m] zwischen den beiden Schalenelementen und der Entfernung R [m] im Bereich zwischen 0,9 C [m²] und 1.1 C [m²] liegt, wobei C eine Konstante ist.

2. Zentrifugalpumpe nach Anspruch 1, dadurch gekennzeichnet, daß eines oder beide Schalenelemente zumindest im wesentlichen die Form eines orthogonalen Hyperboloids aufweisen.

3. Zentrifugalpumpe nach Anspruch 1 oder 2, dadurch gekennzeichnet, daß die Schalenelemente längs des Schalenelementumfangs zueinander hin gebogen sind.

4. Zentrifugalpumpe nach einem der Ansprüche 1 bis 3, dadurch geknnzeichnet, daß die Konkavseite eines oder beider Schalenelemente mit radial gerichteten, erhöhten Teilen und/oder Vertiefungen versehen sind.

5. Verfahren zur Zuführung von kohlenstoffhaltigem Festkraftstoff zu und zu dessen nachfolgender Vergasung in einem Hochdruckvergasungsreaktor, dadurch gekennzeichnet, daß der Kraftstoff mittels einer Zentrifugalpumpe, wie in einem der Ansprüche 1 bis 4 beansprucht, zugeführt wird.

## Revendications

1. Une pompe centrifuge pour introduire une matière pulvérulente dans une enceinte sous pression, comprenant un rotor disposé de manière à tourner dans l'enceinte, ce rotor étant constitué de deux cuvettes dont les faces concaves sont orientées l'une vers l'autre et dont les bords définissent une fente sur la circonférence entière du rotor, et une ou deux admissions connectées axialement au rotor, caractérisée en ce que le produit de la distance d(m) entre les deux cuvettes, mesurée à une distance R(m) du centre du rotor, par la distance R(m) est compris entre 0,9 C(m²) et 1,1 C(m²), où C est une constante.

2. Une pompe centrifuge selon la revendication 1, caractérisée en ce que les deux plateaux ont au moins sensiblement la forme d'un hyperboloïde équilatère.

3. Une pompe centrifuge selon la revendication 1 ou 2, caractérisée en ce que les cuvettes sont incurvées l'une vers l'autre le long de la circonférence de la cuvette.

4. Une pompe centrifuge selon l'une quelconque des revendications 1 à 3, caractérisée en ce que la face concave de l'une des cuvettes ou des deux comporte des parties en relief et/ou des évidements dirigés radialement.

5. Un procédé pour l'introduction d'un combustible carboné solide et pour sa gazéification ultérieure dans un réacteur de gazéification à haute pression, caractérisée en ce que le combustible est introduit au moyen d'une pompe centrifuge selon l'une quelconque des revendications 1 à 4.